# FASCICULE DE BREVET EUROPEEN

(11) **EP 1 481 895 B1**
(45) Date de publication et mention de la délivrance du brevet: **25.10.2006**
(21) Numéro de dépôt: 04291252.7
(22) Date de dépôt: 17.05.2004
(51) Int. Cl.: B64D 27/26

(54) **Dispositif d'accrochage arrière de moteur d'avion**
Vorrichtung für die Hinteraufhängung eines Triebwerkes an einem Luftfahrzeug
Rear suspension device for an aircraft engine

(30) Priorité: 27.05.2003 FR 0306435
(43) Date de publication de la demande: 01.12.2004
(73) Titulaire: SNECMA, 75015 Paris (FR)
(72) Inventeur: Pasquer, Félix Jean-Claude, 77127 Lieusaint (FR); Loewenstein, Philippe, 76490 Saint Arnoult le Bourg (FR); Tesniere, Marc, 91750 Champcueil (FR)
(74) Mandataire: David, Daniel

(56) Documents cités:
- EP-A- 0 564 126
- EP-A- 0 741 074
- EP-A- 0 744 338
- EP-A- 1 031 507
- US-B1- 6 330 995

## Description

La présente invention concerne la suspension des moteurs de propulsion à la structure d'un avion. Elle concerne en particulier une suspension ou un dispositif d'accrochage arrière comprenant des moyens visant à maintenir la suspension en fonction en cas de rupture accidentelle de l'une de ses pièces.

Un moteur de propulsion peut être monté à divers endroits de l'avion en étant accroché à un mât appartenant à la structure de ce dernier. Il peut être suspendu sous les ailes, fixé au fuselage ou monté dans l'empennage par des moyens d'accrochage. Ces moyens d'accrochage ont pour fonction d'assurer la transmission des efforts mécaniques entre le moteur et la structure de l'avion. Les charges à prendre en considération sont orientées selon les trois directions principales. Ce sont notamment le poids du moteur, sa poussée, et les charges aérodynamiques latérales. Les charges à transmettre comprennent aussi la reprise du couple de rotation autour de l'axe du moteur. Ces moyens doivent en outre absorber les déformations subies par le moteur pendant les différentes phases du vol en raison notamment des variations dimensionnelles dues aux dilatations ou contractions thermiques

Un mode de suspension, par exemple, dans le cas d'un turbomoteur à soufflante, consiste à accrocher le moteur à un mât appartenant à la structure de l'aile de l'avion par une suspension ou attache avant et une suspension ou attache arrière. La suspension avant est fixée en particulier sur le carter extérieur de la soufflante et la suspension arrière au carter d'échappement du flux primaire.

Selon une configuration connue, l'attache avant est agencée pour assurer la transmission des efforts mécaniques verticaux et tangentiels entre le moteur et l'avion. L'attache arrière est agencée pour assurer le passage des efforts mécaniques suivant ces mêmes directions, ainsi que la reprise du couple moteur autour de l'axe du turbomoteur et la reprise de poussée. Cette dernière est transmise par l'intermédiaire de deux barres de reprise de poussée accrochées, à l'avant, à la base du carter de soufflante de part et d'autre de l'axe longitudinal, et, à l'arrière, au moyen de suspension arrière du moteur.

La présente invention concerne une attache agencée pour transmettre les efforts verticaux et latéraux entre le moteur et le mât de l'avion. Il s'agit dans la configuration rappelée ci-dessus de l'attache arrière.

On décrit dans le brevet EP 527672 de la demanderesse, une attache de ce type. Elle comprend trois oreilles ou chapes d'accrochage extérieures qui sont réalisées d'un seul tenant à la partie supérieure du carter d'échappement du turboréacteur. Ces oreilles permettent de fixer le carter d'échappement aux extrémités inférieures de trois biellettes de suspension dont les extrémités supérieures sont montées sur une structure d'accrochage disposée sensiblement en arc de cercle dans un plan transversal par rapport à l'axe du moteur. Cette structure d'accrochage comprend une ferrure à laquelle les biellettes sont accrochées par un axe de suspension longitudinal. Cette ferrure est elle-même fixée sous le mât par des moyens appropriés. Par leur agencement les bielles permettent la transmission des efforts en traction et en compression le long de leur axe. Les biellettes sont fixées à leur autre extrémité à des oreilles ou chapes d'une ferrure inférieure solidaire du carter d'échappement.

La solution présentée dans ce brevet porte sur un moyen visant à éviter le décrochage du moteur dans le cas où une rupture mécanique se produirait au niveau de cette ferrure.

Les dispositifs d'accrochage intègrent aussi généralement des moyens de sécurité visant à éviter le décrochage du moteur, en cas de la rupture, non pas de la ferrure mais d'une biellette,. On connaît par exemple des moyens, notamment, constitués d'éléments qui restent inactifs dans les conditions normales de fonctionnement du moteur, c'est à dire quand les pièces du dispositif d'accrochage sont intactes. Quand intervient la rupture de l'une de ces pièces, les moyens de sécurité deviennent actifs. Les éléments se substituent aux pièces défaillantes du dispositif d'accrochage.

On connaît par exemple un dispositif d'attache, tel que décrit dans le brevet US 6330995, comprenant une première bielle et une seconde bielle entre les deux ferrures supérieure et inférieure. La première bielle est montée par une liaison à rotule sur une oreille du moteur, et par deux liaisons distinctes à la ferrure supérieure dont l'une est à rotule et l'autre est axiale. La seconde bielle est liée à une oreille du moteur par une liaison à rotule et à la ferrure supérieure par une seule liaison à rotule en fonctionnement normal. Une deuxième liaison est prévue, mais pour celle-ci l'axe de liaison est monté sur sa contrepartie avec un jeu. En fonctionnement normal, cette deuxième liaison reste donc inactive. Le dispositif comprend une troisième bielle, entre les deux ferrures, qui reste en attente également par la présence de jeux entre l'axe de liaison et leur logement respectif sur les ferrures. En fonctionnement normal, la transmission des efforts est assurée par la première des bielles en raison de ses deux points de liaison avec la ferrure supérieure. La seconde bielle transmet les efforts de tension et de contraction en raison de son montage avec une seule liaison.

En cas de rupture de la seconde bielle, les deux ferrures pivotent l'une par rapport à l'autre autour de la première bielle jusqu'à rattraper les jeux initiaux sur la troisième bielle. Cette dernière devient active et se substitue à la seconde bielle. En cas de rupture de la première bielle, les jeux de la seconde bielle sont rattrapés ainsi que le jeu de la troisième liaison de la seconde bielle. Là encore la suspension continue à remplir sa fonction sans altération de ses performances.

On observe que les première et seconde bielles sont en forme de boomerang et présentent une certaine symétrie. Elles ne sont pas cependant interchangeables car un des axes de la seconde bielle est monté avec jeu alors que les trois axes sont actifs dans la première.

Avec ce type d'agencement, on est amené à usiner des pièces spécifiques. Chaque bielle a une position unique dans la suspension. Il y a donc autant de références que de pièces constituant le dispositif d'accrochage. Cela ne contribue pas à des économies de fabrication et gestion optimales.

En outre, les deux bielles principales sont de formes quasi identiques. Au montage le technicien doit respecter un mode opératoire très précis et procéder avec une grande attention. Le risque d'erreur de monter une pièce pour une autre n'est pas négligeable.

La demanderesse s'est fixé comme objectif la réalisation d'un dispositif d'accrochage de moteur à la structure de l'avion dont les risques d'erreur au montage sont réduits.

Elle s'est également fixé pour objectif la réalisation d'un dispositif comportant des pièces interchangeables. Il serait ainsi possible de réaliser le montage avec un nombre de pièces différentes plus faible que dans les solutions de l'art antérieur. Non seulement on réduirait le risque d'erreur mais aussi les coûts de fabrication, d'entretien et de gestion de stocks.

Le document EP 1 031 507 décrit une suspension d'un moteur à un pylone d'avion. Elle comprend notamment une ferrure supérieure reliée par des moyens d'amortissement des efforts latéraux ou pylone. Deux biellettes relient la ferrure inférieure à la ferrure supérieure et comprennent des moyens de rattrapage de jeu.

L'invention réalise ces objectifs avec un dispositif d'accrochage d'un turbomoteur au mât d'un avion comprenant une ferrure supérieure pourvue de moyens de fixation au mât, sur laquelle sont articulées par des premières liaisons à articulation, trois biellettes disposées dans un plan transversal à l'axe longitudinale du moteur, une première et un deuxième biellettes de part et d'autre de l'axe du moteur et une troisième biellette entre elles deux, les biellettes étant elles-mêmes reliés au moteur par des secondes liaisons à articulations, caractérisé par le fait que les première et deuxième biellettes comportent chacune une troisième liaison en attente et sont interchangeables, et que la ferrure supérieure est formée d'une poutre fixée de manière rigide au mât.

En particulier, au moins l'une des deux liaisons en attente est réalisée par une liaison à articulation avec un axe d'articulation monté avec jeu dans son logement. Notamment chaque liaison en attente est une liaison à articulation avec un axe d'articulation longitudinal monté avec jeu dans son logement, les deux jeux étant identiques.

La troisième liaison en attente relie la bielle à la ferrure supérieure.

De préférence les première et deuxième bielles sont identiques. Ainsi grâce à l'invention, on réalise un dispositif d'accrochage avec moyen de sécurité comportant un nombre réduit de pièces différentes.

Conformément à une autre caractéristique, les premiers et seconds moyens de liaison articulés comprennent une liaison à rotule permettant d'absorber les composantes d'efforts qui ne sont pas orientées perpendiculairement à l'axe d'articulation longitudinal.

D'autres caractéristiques et avantages apparaîtront à la lecture de la description qui suit, accompagnée des dessins en annexe sur lesquels
la figure 1 représente une vue générale du montage d'un moteur au mât d'un avion
la figure 2 représente en perspective le dispositif de montage du moteur conforme à l'invention.
La figure 3 représente le dispositif de la figure 2 en vue éclatée,
La figure 4 montre de face une biellette avec les différentes liaisons.

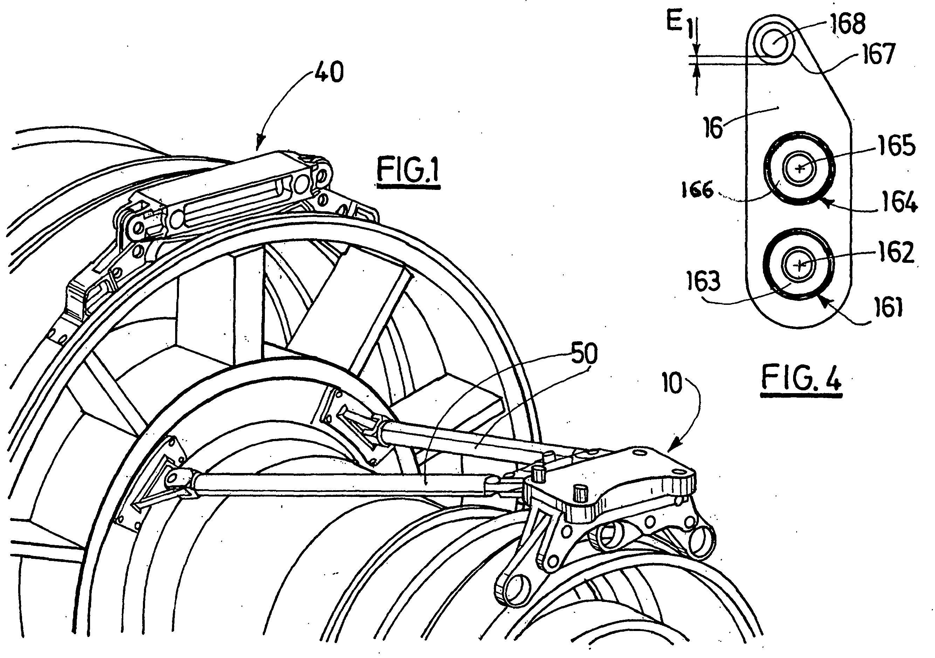

La figure 1 représente vu de trois-quarts arrière un turboréacteur 1 équipé de ses moyens d'accrochage à un mât d'avion qui n'est pas représenté. Il peut s'agir notamment de l'accrochage à l'aile d'un avion. Selon ce mode de suspension, le moteur comprend un dispositif d'attache 40 à l'avant du moteur, fixé sur le carter extérieur de la soufflante. Il comporte aussi un moyen d'attache 10 à l'arrière, fixé au carter d'échappement du flux primaire. La reprise de la poussée est assurée par deux barres 50 accrochées à la base du carter de la soufflante et à l'attache arrière.

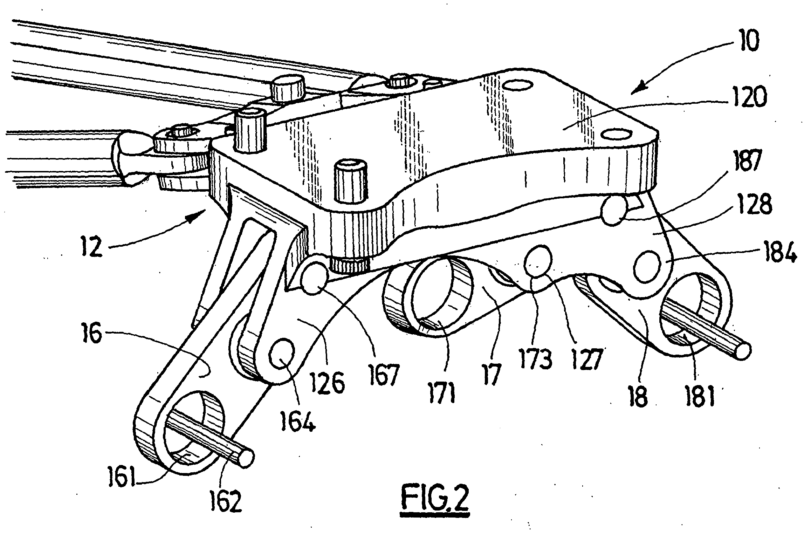

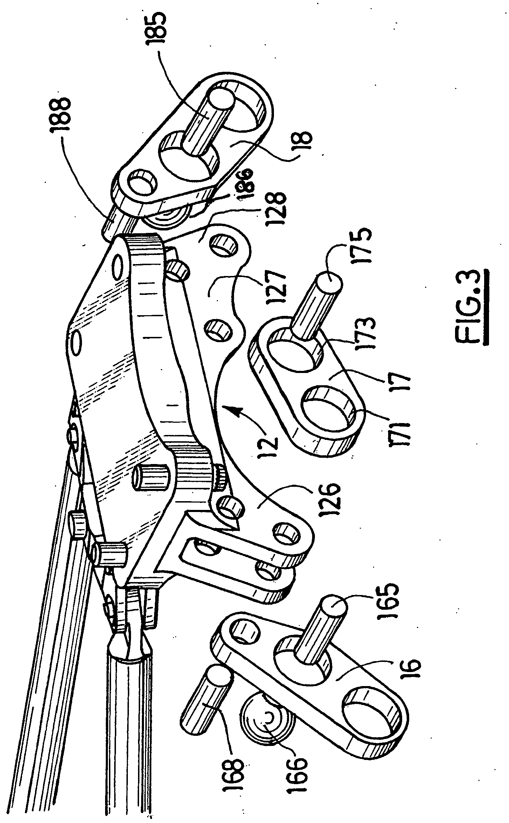

La présente invention concerne l'attache arrière que l'on décrit ci-après en relation avec les figures 2 à 4. L'attache 10 est composée d'une ferrure 12 supérieure, et de trois bielles 16, 17 et 18 reliant la ferrure 12 à des oreilles ou chapes solidaires du carter d'échappement, non représentées. Avantageusement ces oreilles sont les composantes d'une ferrure inférieure unique. Selon le mode de réalisation représenté les bielles sont rectilignes.

La ferrure supérieure est constituée d'une poutre 120 avec, ici, quatre logements pour le passage de boulons ou de vis avec lesquels on rend la ferrure solidaire du mât de l'avion de façon rigide. La poutre est de forme sensiblement rectangulaire ; elle est disposée en sens travers par rapport à l'axe longitudinal du moteur. La poutre se prolonge de part et d'autre de l'axe du moteur, par deux chapes, 126 et 128 respectivement, pour la liaison aux bielles, 16 et 18 respectivement. Une troisième chape 127 solidaire de la poutre en dessous, assure la liaison avec la bielle 17.

Le détail des liaisons est le suivant. La bielle 16 par exemple est reliée à une chape du moteur par une première liaison 161 avec un axe 162. L'axe 162 traverse les oreilles constituant la chape du moteur ainsi que la bielle 16 et est maintenu par des douilles appropriées. Avantageusement la douille 163 visible sur la figure 4 entre l'axe 161 et la bielle est à surface extérieure sphérique de manière à former une liaison à rotule. Les forces qui s'exercent entre la bielle et la chape et qui ne sont pas dans le plan orthogonal à l'axe 162 ne sont ainsi pas transmis. Ce type de liaison est en soi bien connu dans le domaine. La liaison à rotule présente la particularité de ne transmettre que les efforts en traction et en compression par l'axe 162. La rotule 163 n'a pas été représentée sur la figure 2.

La bielle 16 est liée à la chape 126 par une deuxième liaison 164 qui, ici, est avantageusement aussi à rotule comme la première. Elle comprend un axe 165 et une douille à surface sphérique 166 sur la bielle 16. L'axe 165 est monté à rotation dans des logement ménagés dans la chape 126 par l'intermédiaire de douilles appropriées.

Conformément à l'invention, la bielle 16 est reliée à la chape 126 par une troisième liaison à articulation 167 qui est en attente. Par ce terme, on désigne une liaison qui en fonctionnement normal reste inactive ; elle ne transmet aucune force. Elle devient active et transmet des efforts en cas de rupture de pièces déterminées de l'attache. On réalise une telle liaison, par exemple, au moyen d'un axe 168 monté avec jeu radial E1 dans des logements alignés sur la bielle d'une part et sur la chape 126 d'autre part. Le jeu est suffisant pour que l'axe reste inactif dans toutes les phases du vol.

La bielle 18 comporte comme la bielle 16 une première liaison 181 à rotule et axe 182 avec une chape du moteur. Sur la figure 2, la rotule n'a pas été représentée. Elle est reliée par une deuxième liaison à rotule 184 et axe 185 à la chape 128. Elle comprend également une liaison en attente 187 avec la chape 128. Cette liaison est de préférence réalisée comme dans la chape 126, au moyen d'un axe 188 monté avec un jeu radial défini E2 dans des logements alignés sur la chape et la bielle.

Avantageusement les jeux E1 et E2 sont identiques. En outre en raison de la symétrie de la structure et des moyens constituant l'attache, les deux bielles ont la même forme, de préférence, et sont interchangeables. Elles sont avantageusement rectilignes.

Une troisième bielle 17, disposée entre les deux premières, comporte un premier moyen de liaison 171 avec une chape solidaire du moteur. L'axe 172 traverse la bielle et les oreilles de la chape selon une direction longitudinales par rapport au moteur. Un deuxième moyen de liaison 173 est constitué par un axe 175 qui traverse la bielle 17 et la chape 127 sur la ferrure supérieure 12.

On décrit ci-après le mode de fonctionnement du dispositif qui vient d'être décrit.

En fonctionnement normal, les efforts situés dans le plan perpendiculaire à l'axe du moteur, c'est à dire des efforts ayant une composante verticale et/ou latérale, sont transmis du moteur au mât par la ferrure inférieure, les premiers et deuxièmes moyens de liaison et la ferrure supérieure. Les deux biellettes 16 et 18 présentent une inclinaison symétrique par rapport à la direction verticale passant par l'axe du moteur. Elles sont disposées en trapèze. Ces deux bielles transmettent par exemple à la structure de l'avion le poids du moteur et les efforts latéraux auxquels il est soumis pendant le vol. Les deux liaisons en attente 167 et 187 sont inactives. En raison des jeux E1 et E2 aucune force n'est transmise par ces liaisons quelle que soit la phase du vol.

La troisième bielle présente une inclinaison par rapport à l'horizontale. Elle est disposée à proximité du plan vertical qui passe par l'axe du moteur, et transmet à la structure portante le couple exercé par le carter dû à la rotation du moteur.

Dans l'hypothèse où la bielle 16 par exemple vient à rompre, il se produit un basculement entre les deux ferrures autour de la bielle 18 jusqu'à ce que le jeu radial de la troisième liaison 187 ait disparu. Ce déplacement se produit aussi en cas de défaillance d'une autre pièce située dans la trajectoire des efforts passant par la bielle 16, telle que la poutre de la ferrure supérieure, une oreille de la chape 146 ou bien une liaison à rotule.

La liaison entre les deux ferrures devient alors rigide. Cette liaison assure la transmission à la fois des efforts verticaux et/ou latéraux et aussi le couple dû à la rotation du moteur.

Dans l'hypothèse où c'est la bielle 18 qui vient à rompre, la transmission des efforts mécaniques est alors assurée par l'ensemble, alors rigide formé par les bielles 16 et 17.

Dans l'hypothèse où c'est la bielle 17 qui rompt et si les jeux E1 et E2 sont identiques, les deux jeux sont rattrapés de la même façon et la liaison assuré par les deux bielles 16 et 18 devient rigide. Pour tenir compte de cette hypothèse de rupture on peut aussi prévoir que les deux jeux sont différents privilégiant ainsi le passage des efforts mécaniques par l'une des deux bielles.

## Revendications

1. Dispositif d'accrochage d'un turbomoteur (1) au mât d'un avion comprenant une ferrure supérieure (12) pourvue de moyens de fixation au mât, sur laquelle sont articulées, par des secondes liaisons (164, 184) à articulation, trois biellettes transversalement à l'axe longitudinal du moteur, une première (16) et une deuxième (18) biellettes de part et d'autre de l'axe du moteur et une troisième biellette (17) entre elles deux, les biellettes étant elles-mêmes reliées au moteur par des premières liaisons (161, 181) à articulations, **caractérisé par le fait que** les première (16) et deuxième (18) biellettes comportent chacune une troisième (167, 187) liaison en attente et sont interchangeables, et que la ferrure supérieure (12) est formée d'une poutre (120) fixée rigidement au mât.

2. Dispositif selon la revendication 1 dont au moins l'une des deux liaisons (167,187) en attente est réalisée par une liaison à articulation avec un axe (168, 188) d'articulation monté avec jeu dans son logement.

3. Dispositif selon la revendication 2 dont chaque liaison en attente (167, 187) est une liaison à articulation avec un axe d'articulation monté avec jeu dans son logement.

4. Dispositif selon l'une des revendications 1 à 3 dont la troisième liaison (167, 187) en attente relie la bielle à la ferrure supérieure.

5. Dispositif selon l'une des revendications précédentes dont les première et deuxième biellettes (16, 18) sont de formes identiques.

6. Dispositif selon l'une des revendications précédentes formant l'attache arrière (10) dans un système de montage avec attache avant (40), attache arrière (10) et reprise de poussée par barres (50).

## Claims

1. A device for attaching a turbo engine (1) to an aircraft pylon including an upper brace (12) fitted with pylon fastening means, whereon are hinged by second ball joint connections (164, 184), three rocker bars transversal to the longitudinal axis of the engine, a first (16) and a second (18) rocker bars on both sides of the axis of the engine and a third rocker bar (17) between both of them, the rocker bars being themselves linked with the engine by first ball joint connections (161, 181), **characterised in that** the first (16) and second (18) rocker bars each include a third (167, 187) stand-by link and **in that** the upper brace (12) is formed of a beam (120) fixed rigidly to the pylon.

2. A device according to claim 1, whereof at least one of both stand-by connections (167, 187) is provided as a ball joint connection with a pivot pin (168, 188) mounted with a backlash in its housing.

3. A device according to claim 2, whereof each stand-by link (167, 187) is a ball joint connection with a longitudinal pivot pin mounted with a backlash in its housing.

4. A device according to one of the claims 1 to 3, whereof the third stand-by connection (167, 187) links the connecting rod to the upper brace.

5. A device according to one of the previous claims, whereof the first and second rocker bars (16, 18) are identical in shape.

6. A device according to one of the previous claims forming the rear attachment (10) in an assembly system with a front attachment (40), a rear attachment (10) and a bar-actuated thrust recovery (50).

## Patentansprüche

1. Vorrichtung zum Ankoppeln eines Turbinen-Triebwerks (1) am mast eines Flugzeuges, umfassend: einen oberen Beschlag (12), welcher mit Mitteln zur Befestigung am Stiel versehen ist, an welchem mittels zweiter Gelenk-Verbindungen (164, 184) drei Schwenkarme transversal zur Longitudinal-Achse des Motors angelenkt sind, ein erster (16) und ein zweiter (18) Schwenkarm beiderseits der MotorAchse und ein dritter Schwenkarm (17) zwischen diesen beiden, wobei die Schwenkarme ihrerseits mit dem Triebwerk mittels erster Gelenk-Verbindungen (161, 181) verbunden sind, **dadurch gekennzeichnet, dass** der erste (16) und der zweite (18) Schwenkarm jeweils eine dritte (167, 187) Bereitschafts-Verbindung aufweisen und austauschbar sind, und dass der obere Beschlag (12) von einem steif am Stiel befestigten Träger (120) gebildet wird.

2. Vorrichtung gemäß Anspruch 1, wobei zumindest eine der zwei Bereitschafts-Verbindungen (167, 187) durch eine Gelenk-Verbindung mit einer mit Spiel in ihrer Aufnahme montierte Gelenk-Achse (168, 188) realisiert ist.

3. Vorrichtung gemäß Anspruch 2, wobei jede Bereitschafts-Verbindung (167, 187) eine Gelenk-Verbindung mit einer mit Spiel in ihrer Aufnahme montierten Gelenk-Achse ist.

4. Vorrichtung gemäß einem der Ansprüche 1 bis 3, wobei die dritte Bereitschafts-Verbindung (167, 187) den Schwenkarm mit dem oberen Beschlag verbindet.

5. Vorrichtung gemäß einem der vorhergehenden Ansprüche, wobei der erste und der zweite Schwenkarm (16, 18) von identischer Form sind.

6. Vorrichtung gemäß einem der vorhergehenden Ansprüche, welche in einem Montage-System mit vorderer Aufhängung (40), hinterer Aufhängung (10) und Schubaufnahme mittels Stangen (50) die hintere Aufhängung (10) bildet.
